# EUROPÄISCHE PATENTSCHRIFT

(11) **EP 0 456 009 B1**
(45) Veröffentlichungstag und Bekanntmachung des Hinweises auf die Patenterteilung: **07.09.1994**
(21) Anmeldenummer: 91106014.3
(22) Anmeldetag: 16.04.1991
(51) Int. Cl.: F16L 37/248, F16L 37/24

(54) **Strahlrohr mit Verbindungselement für Hochdruckreinigungsgeräte**
Jet pipe with joining element for high pressure purification appliances
Tuyau à jet avec éléments de fixation pour appareil de nettoyage à haute pression

(30) Priorität: 09.05.1990 DE 4014824
(43) Veröffentlichungstag der Anmeldung: 13.11.1991
(73) Patentinhaber: Alfred Kärcher GmbH & Co., 71364 Winnenden (DE)
(72) Erfinder: Schneider, Josef, W-7150 Backnang (DE); Skoumal, Roger, W-7054 Korb (DE)
(74) Vertreter: Hoeger, Stellrecht & Partner

(56) Entgegenhaltungen:
- EP-A- 234 465
- EP-A- 0 099 033
- EP-A- 0 375 666
- VDI-Nachrichten Nr. 12, 22.03.85, Seite 22 "Technische Kunststoffe"

## Beschreibung

Die Erfindung betrifft ein Strahlrohr für Hochdruckreinigungsgeräte mit einem axialen, zylindrischen Loch mit einer Aufweitung zur Aufnahme eines einen Teil eines mit dem Strahlrohr zu verbindenden Bauteiles bildenden Rohrstutzens, welches Strahlrohr zu einem Bajonettverschluß gehörende Schraubteile aufweist.

Strahlrohre der genannten Art müssen mit anderen Teilen eines Hochdruckreinigungsgerätes, zum Beispiel mit einer Spritzpistole, lösbar verbunden werden. Bajonettverschlüsse sind für solche Verbindungen anwendbar. Da sie aber mechanisch stabil sein müssen, sind sie normalerweise kompliziert aufgebaut und bestehen aus einer größeren Anzahl von Teilen, was insbesondere auch für das Verbindungselement mit den Schraubkeilen zutrifft. Das macht den Bajonettverschluß teuer und störanfällig.

Beispielsweise wird in der EP-A2-0 099 033 ein Strahlrohr aus Metall beschrieben, welches über einen komplizierten Bajonettverschluß mit einer Schlauchleitung verbindbar ist.

Ausgehend von diesem Stand der Technik liegt der Erfindung die Aufgabe zugrunde, das Strahlrohr so auszubilden, daß der Bajonettverschluß - und insbesondere das Teil mit den Schraubkeilen - aus wenigen Teilen besteht, einfach aufgebaut ist und dabei trotzdem mechanisch stabil ist.

Diese Aufgabe wird bei einem Strahlrohr der eingangs beschriebenen Art erfindungsgemäß dadurch gelöst, daß das Strahlrohr aus Kunststoff besteht, daß die Schraubkeile direkt radial abstehend angespritzt sind und daß in die Aufweitung am Aufnahmeende des Loches ein O-Ring eingelegt ist, den ein in die Aufweitung passender Gegenhalter festhält.

Es ergibt sich auf diese Weise eine besonders kompakte, stabile und leicht herzustellende Konstruktion eines Strahlrohres. Einmal für die Verwendung eines im wesentlichen einteilig aus Kunststoff hergestellten Teiles zu einer Herabsetzung der Herstellungskosten und des Gesamtgewichtes, zum anderen ermöglicht die Einlegung des O-Ringes in eine erweiterte Ausnehmung, in die ein Gegenhalter eingesetzt wird, eine rasche Montage des Strahlrohres mit einer unkomplizierten Einlage eines O-Ringes.

Zum Festhalten des Gegenhalters ist es günstig, wenn dieser zwei einander gegenüberliegende, radial abstehende Vorsprünge aufweist, welche, wenn der Gegenhalter in die Aufweitung gedrückt wird, in entsprechend ausgebildete und lokalisierte Vertiefungen in der Aufweitung einrasten. Die Anbringung des O-Ringes erfordert also lediglich zwei zusätzliche Teile, nämlich den O-Ring und den Gegenhalter. Es kommen als weitere Vorteile hinzu, daß die Befestigung des Gegenhalters am Strahlrohr dank der Eigenschaften des Kunststoffes äußerst einfach ist und daß sich, da der Gegenhalter und der O-Ring mit dem Strahlrohr fest verbunden sind, die Anzahl der Teile, welche die Bedienungsperson handhaben muß, nicht erhöht. Es kann vorgesehen sein, daß das axiale Loch mit einer metallischen Innenwand ausgekleidet ist.

Es ist vorteilhaft, wenn es ich bei dem Kunststoff um glasfaserverstärktes Polyamid handelt.

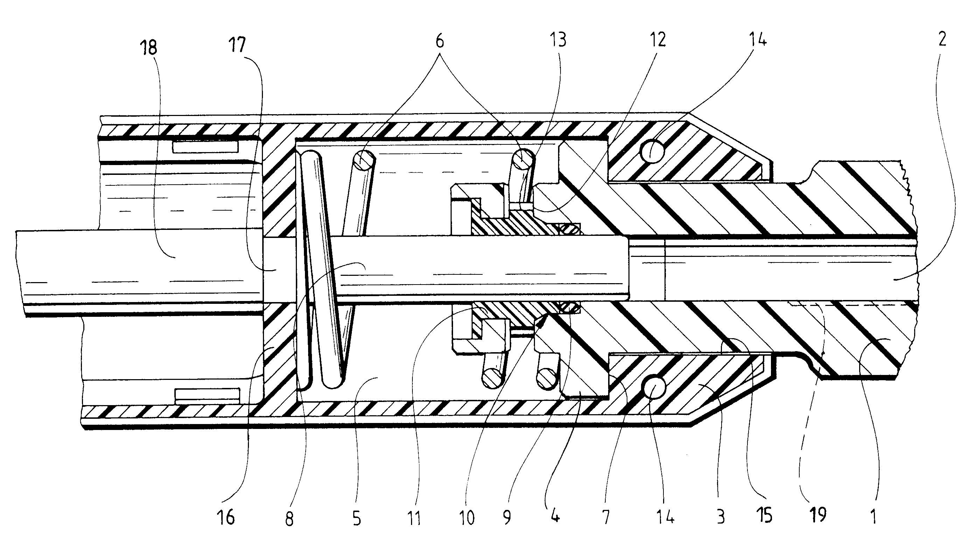

Die nachfolgende Beschreibung einer bevorzugten Ausführung der Erfindung dient im Zusammenhang mit der Zeichnung der näheren Erläuterung. Diese zeigt einen Längsschnitt durch das eine Ende des erfindungsgemäßen Strahlrohres und durch das eine Ende des mit dem Strahlrohr verbundenen Bauteils.

In der Figur ist das eine Ende eines Strahlrohrs 1 dargestellt, welches aus Kunststoff, bevorzugt aus glasfaserverstärktem Polyamid, besteht. Direkt angeformt an das gezeigte Ende des Strahlrohrs 1 sind radial abstehend zwei Schraubkeile 4. Das Strahlrohr 1 weist ein axiales zylindrisches Loch 2 auf, welche am gezeigten Ende des Strahlrohrs in eine Aufweitung 10 übergeht. Am Übergang zwischen der Aufweitung 10 und dem Loch 2 ist ein O-Ring 9 eingelegt, der mittels eines in die Aufweitung 10 passenden Gegenhalters 11 fixiert ist. Der Gegenhalter 11 weist zwei einander gegenüberliegende Vorsprünge 13 auf, welche, wenn der Gegenhalter in die Aufweitung 10 gedrückt wird, in entsprechend ausgebildete und positionierte Vertiefungen 12 in der Wand der Aufweitung 10 einrasten. Der Gegenhalter 11 und der O-Ring 9 sind also fest in das Strahlrohr 1 integriert.

Ein Bauteil 3, von dem ein Ende in der Figur gezeigt ist und mit dem das Strahlrohr 1 mittels eines Bajonettverschlusses verbunden ist, besteht ebenfalls aus Kunststoff, bevorzugt aus glasfaserverstärktem Polyamid. Das Bauteil 3 weist am gezeigten Ende eine Öffnung 15 auf, deren Querschnitt gleich dem Querschnitt des die Schraubkeile 4 aufweisenden Abschnitts des Strahlrohrs 1 ist. An die Öffnung 15 schließt sich eine zylindrische Ausnehmung 5 mit kreisrundem Querschnitt an, welche - mit einer Stufe 7 - an die Öffnung 15 und an eine Zwischenwand 16, an welche sich weitere Abschnitte des Bauteils 3 anschließen, grenzt. Der Durchmesser der Ausnehmung 5 ist größer oder gleich dem größten Durchmesser des die Schraubkeile 4 einschließenden Strahlrohrquerschnitts. In der Ausnehmung 5 und konzentrisch mit ihr befindet sich ein Rohrstutzen 8, welcher sich an eine Öffnung 17 in der Zwischenwand 16 anschließt und welcher noch etwas in die Öffnung 15 hineinragt. Außerdem befindet sich in der Aus- nehmung 5 noch eine metallene Druckfeder 6, welche den Rohrstutzen 8 umgibt. Auf der von der Ausnehmung 5 abgewandten Seite der Zwischenwand 16 schließt sich konzentrisch mit dem Rohrstutzen 8 und der Öffnung 17 ein Rohr 18 an.

Üblicherweise besteht das Bauteil 3 aus zwei getrennt voneinander hergestellten Hälften, wobei der Rohrstutzen 8 in die eine Hälfte integriert ist. Diese Art der Herstellung ist schon deshalb angezeigt, weil das Bauteil 3 normalerweise Teil eines größeren Ganzen ist und es zu kompliziert wäre, ein großes Aggregat in einem Stück herzustellen. Die Trennung in zwei Hälften ist auch deshalb vorteilhaft, weil sich dann die Ausnehmung 5 leichter herstellen und die Druckfeder 6 leichter einlegen läßt. Die beiden Hälften werden beispielsweise durch Schrauben miteinander verbunden, wofür die beiden Löcher 14 vorgesehen sind. Das Bauteil 3 ist beispielsweise Teil einer Sprühpistole, welche über einen Druckschlauch mit dem Hochdruckreinigungsgerät verbunden ist.

Die Herstellung der Verbindung zwischen dem Strahlrohr 1 und dem Bauteil 3 ist denkbar einfach. Zunächst wird das Strahlrohr 1 in das Bauteil 3 gesteckt und damit auch der Rohrstutzen 8 in das Loch 2, wobei die Einführlage für die Bedienperson von außen erkennbar ist. Anschließend wird das Strahlrohr gegen das Bauteil 3 gedreht. Beim Lösen der Verbindung erfolgen die beiden Schritte in umgekehrter Reihenfolge.

In der hergestellten Verbindung werden die Schraubkeile 4 mittels der Druckfeder 6 gegen die Stufe 7 zwischen der Ausnehmung 5 und der Öffnung 15 gedrückt. Für hohe Zugbelastungen können die Flächen der Schraubenkeile 4 großflächig angelegt sein. Dies setzt natürlich voraus, daß die Ausnehmung 5, die Öffnung 15 und damit das Bauteil 3 entsprechende Ausmessungen haben. Die Dichtigkeit der Verbindung zwischen dem Rohrstutzen 8 und dem Loch 2 wird mittels des O-Rings 9 erreicht. Zur Herstellung der Verbindung muß die Bedienperson nur zwei Teile, das Strahlrohr 1 und das Bauteil 3, in die Hand nehmen. Abgesehen von der Druckfeder 6, welche aus Metall besteht, besteht das Strahlrohr 1 und das Bauteil 3 aus Kunststoff. Dadurch ist die Verbindung gut elektrisch und wärmemäßig isolierend.

Das Strahlrohr 1 besteht insgesamt aus Kunststoff, es ist jedoch möglich, das axiale Loch 2 mit einer Innenwand 19 aus Metall auszukleiden, so daß sich ein schichtförmiger Aufbau Metall/Kunststoff ergibt. In der Zeichung ist dies an einem Teil des länglichen axialen Loches 2 gestrichelt dargestellt.

## Patentansprüche

1. Strahlrohr (1) für Hochdruckreinigungsgeräte mit einem axialen, zylindrischen Loch (2) mit einer Aufweitung (10) zur Aufnahme eines einen Teil eines mit dem Strahlrohr (1) zu verbindenden Bauteils (3) bildenden Rohrstutzens (8), welches Strahlrohr (1) zu einem Bajonettverschluß gehörende Schraubkeile (4) aufweist, dadurch gekennzeichnet, daß das Strahlrohr (1) aus Kunststoff besteht, daß die Schraubkeile (4) direkt radial abstehend angespritzt sind und daß in die Aufweitung (10) am Aufnahmeende des Loches (2) ein O-Ring (9) eingelegt ist, den ein in die Aufweitung (10) passender Gegenhalter (11) festhält.

2. Strahlrohr nach Anspruch 1, dadurch gekennzeichnet, daß der Gegenhalter (11) zwei einander gegenüberliegende, radial abstehende Vorsprünge (13) aufweist, welche, wenn der Gegenhalter (11) in die Aufweitung (10) gedrückt wird, in entsprechend ausgebildete und lokalisierte Vertiefungen (12) in der Aufweitung (10) einrasten.

3. Strahlrohr nach einem der Ansprüche 1 oder 2, dadurch gekennzeichnet, daß das axiale Loch (2) mit einer metallischen Innenwand (19) ausgekleidet ist.

4. Strahlrohr nach einem der vorstehenden Ansprüche, dadurch gekennzeichnet, daß der Kunststoff glasfaserverstärktes Polyamid ist.

## Claims

1. Jet pipe (1) for high-pressure cleaning devices comprising an axial, cylindrical bore (2) with an enlarged portion (10) for receiving a pipe portion (8) forming part of a component (3) to be connected with the jet pipe (1), said jet pipe (1) having screw cams (4) belonging to a bayonet catch, characterized in that the jet pipe (1) consists of plastic, that the screw cams (4) are injection-molded directly onto the pipe so as to project radially and that an O-ring (9) is inserted into the enlarged portion (10) at the receiving end of the bore (2), said 0-ring being securely held by a counterstay (11) fitting into the enlarged portion (10).

2. Jet pipe as defined in claim 1, characterized in that the counterstay (11) has two radially protruding projections (13) located opposite one another, said projections locking into correspondingly designed and localized recesses (12) in the enlarged portion (10) when the counterstay (11) is pressed into said enlarged portion (10).

3. Jet pipe as defined in either of claims 1 or 2, characterized in that the axial bore (2) is lined with a metallic inner wall (19).

4. Jet pipe as defined in any of the preceding claims, characterized in that the plastic is a glass-fiber reinforced polyamide.

## Revendications

1. Tube de pulvérisation (1) pour des appareils de nettoyage à haute pression, comportant un trou cylindrique axial (2) avec un élargissement (10) pour la réception d'un manchon de tube (8) formant une partie d'un composant (3) à relier au tube de pulvérisation (1) qui présente des coins à vis (4) faisant partie d'un obturateur à baïonnette, caractérisé en ce que le tube de pulvérisation (1) est constitué en matière plastique, en ce que les coins à vis (4) sont injectés en saillie directe radiale, et en ce que dans l'élargissement (10) à l'extrémité de la réception du trou (2) est posé un joint torique (9) qui est retenu par un organe opposé de maintien (11) ajusté dans l'élargissement (10).

2. Tube de pulvérisation selon la revendication 1, caractérisé en ce que l'organe opposé de maintien (11) présente deux saillies (13) opposées l'une à l'autre et s'écartant radialement qui, lorsque l'organe opposé de maintien (11) est pressé dans l'élargissement (10), s'encliquettent dans des creux localisés et réalisés en correspondance (12) dans l'élargissement (10).

3. Tube de pulvérisation selon l'une ou l'autre des revendications 1 et 2, caractérisé en ce que le trou axial (2) est revêtu d'une paroi intérieure métallique (19).

4. Tube de pulvérisation selon l'une quelconque des revendications précédentes, caractérisé en ce que la matière plastique est du polyamide renforcé par des fibres de verre.
